**Europäisches Patentamt**

**European Patent Office**

**Office européen des brevets**

(11) Veröffentlichungsnummer: **0 459 036 B1**

(12) **EUROPÄISCHE PATENTSCHRIFT**

(45) Veröffentlichungstag der Patentschrift: **16.08.95**

(51) Int. Cl.6: **G01N 25/18**

(21) Anmeldenummer: **90250138.6**

(22) Anmeldetag: **29.05.90**

(54) **Verfahren und Vorrichtung zur Ermittlung der Wärmeleitfähigkeit von Werkstoffen.**

(43) Veröffentlichungstag der Anmeldung:
**04.12.91 Patentblatt 91/49**

(45) Bekanntmachung des Hinweises auf die Patenterteilung:
**16.08.95 Patentblatt 95/33**

(84) Benannte Vertragsstaaten:
**FR GB IT**

(56) Entgegenhaltungen:
DE-A- 3 930 850
US-A- 4 259 859

F. HENNING ET AL: "Handbuch der Physik, Band XI: Anwendung der Thermodynamik"1926, SPRINGER, BERLIN DE

REVIEW OF SCIENTIFIC INSTRUMENTS. vol. 49, no. 11, November 1978, NEW YORK US Seiten 1531 - 1536; E. GOLDRATT ET AL: "New method for measuring the thermal conductivity"

F. KOHLRAUSCH: "Praktische Physik" 22. Auflage, Band 1, 1968, B. G. TEUBNER,STUTTGART DE

MEASUREMENTS. vol. 1, no. 4, 1983, LONDON

GB Seiten 167 - 172; J-P. ISSI ET AL:"Static thermal conductivity methods for solid materials"

(73) Patentinhaber: **FRAUNHOFER-GESELLSCHAFT ZUR FÖRDERUNG DER ANGEWANDTEN FORSCHUNG E.V.**
**Leonrodstrasse 54**
**D-80636 München (DE)**

(72) Erfinder: **Poessnecker, Wolfgang, Dr. rer. nat.**
**Nürnberger Strasse 43**
**O-8027 Dresden (DE)**
Erfinder: **Kieback, Bernd ,Dr. Ing.**
**Otto-Dix-Ring 24**
**O-8020 Dresden (DE)**
Erfinder: **Berger, Frank, Dipl. Ing.**
**Dieselstrasse 54c**
**O-8045 Dresden (DE)**
Erfinder: **Heinze, Horst**
**Reichstädter Strasse 24**
**O-8230 Dippoldiswalde (DE)**

**Beschreibung**

Die Erfindung bezieht sich auf das Gebiet der Energietechnik, Meßtechnik und des Bau- und Maschinenwesens und betrifft ein Verfahren und eine Vorrichtung zur Ermittlung der Wärmeleitfähigkeit von Werkstoffen, z. B. aus Metall oder Keramik usw.

Seit vielen Jahren sind Verfahren und Vorrichtungen zur Ermittlung der Wärmeleitfähigkeit bekannt. Dazu werden Relativ- und Absolut-Meßverfahren verwendet. Von Biot und Despretz sind ein Verfahren und eine Vorrichtung entwickelt worden, die es ermöglichen, die Wärmeleitfähigkeit von festen metallischen Werkstoffen zu ermitteln (F. Kohlrausch "Praktische Physik" Band 1, B.G. Teubner Verlagsgesellschaft, Stuttgart, 1955, S. 362). Dabei werden zwei Stäbe von gleicher Länge, Querschnitt und Oberfläche an einem Ende auf gleiche Temperatur geheizt. Nach Erreichen des stationären Zustandes wird die Temperatur jedes Stabes an drei Stellen, die den gleichen Abstand voneinander haben, gemessen, über die mathematische Beziehung

$$\lambda_X = \left( \frac{\lg\left(n_A + \sqrt{n_A^2 - 1}\right)}{\lg\left(n_X + \sqrt{n_X^2 - 1}\right)} \right)^2 \cdot \lambda_A$$

$$\text{mit} \quad n_A = \frac{1}{2} \cdot \left( \frac{T_{1A} - T_U + T_{3A} - T_U}{T_{2A} - T_U} \right)$$

$$n_X = \frac{1}{2} \left( \frac{T_{1X} - T_U - T_{3X} - T_U}{T_{2X} - T_U} \right)$$

wobei

| | |
|---|---|
| Index A | - die Werte der Referenzprobe |
| Index X | - die Werte der Meßprobe |
| $T_1$ | - die Temperatur an der Stelle 1 |
| $T_2$ | - die Temperatur an der Stelle 2 |
| $T_3$ | - die Temperatur an der Stelle 3 |
| $T_U$ | - die Umgebungstemperatur |
| $\lambda_A$ | - die Wärmeleitfähigkeit der Referenzprobe (bekannt) |
| $\lambda_X$ | - die Wärmeleitfähigkeit der Meßprobe |

darstellen, wird die Wärmeleitfähigkeit der Meßprobe ermittelt.

Der Nachteil des Verfahrens besteht darin, daß die so erreichbaren Ergebnisse sehr ungenau sind. Der Nachteil der Vorrichtung ist die sehr geringe Reproduzierbarkeit der Ergebnisse.

Ziel der Erfindung ist es, ein Verfahren zur Ermittlung der Wärmeleitfähigkeit von Werkstoffen anzugeben, durch das sehr genaue Ergebnisse erreichbar werden. Weiterhin ist es Ziel der Erfindung, eine Vorrichtung zur Ermittlung der Wärmeleitfähigkeit von Werkstoffen anzugeben, die eine gute Reproduzierbarkeit der Ergebnisse ermöglicht.

Der Erfindung liegt die Aufgabe zugrunde, ein Verfahren und eine Vorrichtung zur Ermittlung der Wärmeleitfähigkeit von Werkstoffen zu entwickeln, die eine bessere Realisierung der theoretisch geforderten Randbedingungen ermöglichen. Die Aufgabe der Erfindung wird durch ein Verfahren zur Ermittlung der Wärmeleitfähigkeit von Werkstoffen wie in Anspruch 1 angegeben gelöst.

Weiterhin wird die Aufgabe der Erfindung durch eine Vorrichtung zur Ermittlung der Wärmeleitfähigkeit von Werkstoffen wie in Anspruch 2 angegeben gelöst.

Vorteilhafterweise haben das thermostatierte Auflageteil und die Seite des Zwischenstücks, die mit dem thermostatierten Auflageteil in Berührung steht, jeweils die Form einer Kugelkalotte und passen formschlüssig ineinander.

Ebenfalls vorteilhaft ist es, daß das Zwischenstück zwischen thermostatiertem Auflageteil und Probe und die Scheibe zwischen Probe und Andrückteil aus Kupfer bestehen.

Die Vorteile des erfindungsgemäßen Verfahrens und der Vorrichtung bestehen darin, daß
- sehr genaue Ergebnisse erreicht werden können,
- eine gute Reproduzierbarkeit der Ergebnisse ermöglicht wird,

- eine Ermittlung der Wärmeleitfähigkeit in wesentlich kürzerer Zeit als mit den Verfahren und Vorrichtungen nach dem Stand der Technik möglich ist,
- relativ kurze Proben eingesetzt werden können,
- nicht bohrbare Proben verwendet werden können, indem eine Nut in ihre Stirnflächen eingearbeitet wird und
- von festen Werkstoffen aller Art die Wärmeleitfähigkeit ermittelt werden kann.

Bei der erfindungsgemäßen Ermittlung der unbekannten Wärmeleitfähigkeit eines Werkstoffes ist die Kenntnis der Wärmeleitfähigkeit eines anderen Stoffes notwendig. Diese Werte sind aus Tabellenbüchern entnehmbar, wobei die Unterschiede in der Angabe der Wärmeleitfähigkeit für einen Werkstoff bis zu 600 % betragen können. Der so in das Endergebnis hineingetragene Fehler geht aber nicht zu Lasten des erfindungsgemäßen Verfahrens und der Vorrichtung. Um diesen Fehler zu eliminieren, ist es deshalb vorteilhaft, das Verhältnis von $\lambda_X / \lambda_A$ zu betrachten.

Mit dem erfindungsgemäßen Verfahren und der Vorrichtung wird weiterhin ein Vorurteil der Fachwelt überwunden. In dem Standardwerk von F. Kohlrausch "Praktische Physik" Band 1 von 1955 sind auf S. 362 das im Abschnitt "Charakteristik des bekannten Standes der Technik" dieser Erfindung dargelegte Verfahren und Vorrichtung beschrieben. Der abschließende Satz dieses Abschnittes lautet dort: "Trotz der experimentellen Einfachheit ist die Bestimmung von $\lambda$ nach diesem Verfahren sehr unsicher (störende Luftbewegungen usw.)." Die Auswertung der Meßergebnisse mit dieser Vorrichtung und nach dem Verfahren von Biot und Despretz ist z. B. im "Handbuch der Physik" Band XI "Anwendung der Thermodynamik", 1926, S. 53 - 58 dargelegt. Dort werden zahlreiche Fehlerquellen des Verfahrens und der Vorrichtung angegeben, für deren vollständige Beseitigung keine Lösungen aufgezeigt worden sind. Abschließend wird eingeschätzt: "Unsere Besprechung der Despretzschen Methode zeigt, wie verwickelt selbst Relativmessungen von $\lambda$ bei gewöhnlichen Temperaturen werden, wenn man sich mit einer Genauigkeit von einigen Prozenten nicht begnügen will."

Aus den o. g. Zitaten aus Standardwerken kann abgeleitet werden, daß in der Fachwelt eine allgemein verbreitete Voreingenommenheit gegen dieses Verfahren und Vorrichtung besteht.

Durch das erfindungsgemäße Verfahren und Vorrichtung ist dieses Vorurteil überwunden worden. Mit einem einfachen Verfahren und Vorrichtung ist nunmehr eine genaue und reproduzierbare Ermittlung der Wärmeleitfähigkeit von Werkstoffen möglich.

**Ausführungsbeispiel**

Die Erfindung soll an mehren Beispielen erläutert werden. Dabei stellen

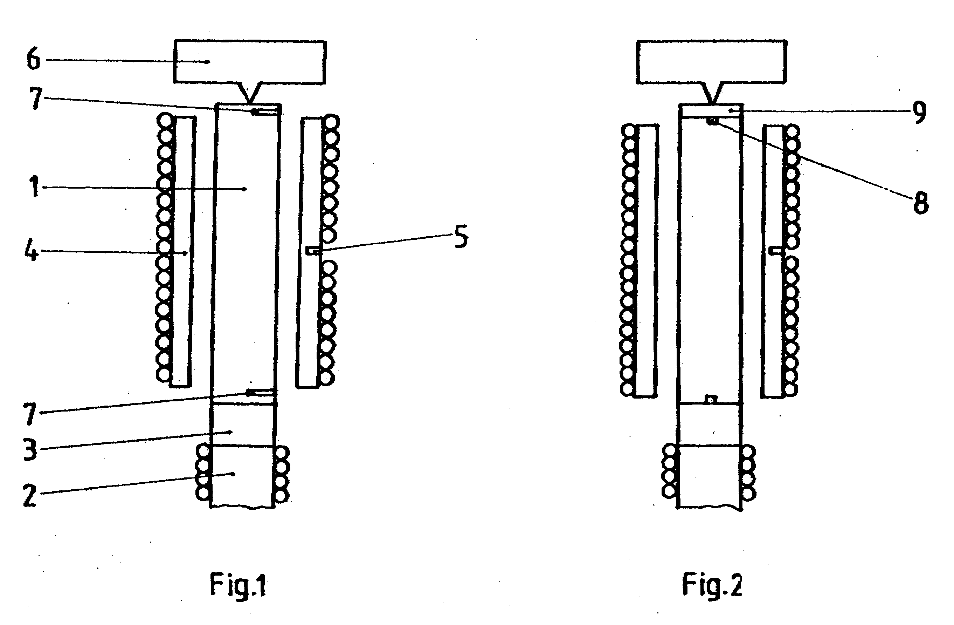

Fig. 1      den schematischen Aufbau der Vorrichtung und

Fig. 2      eine Variantenlösung der Vorrichtung dar.

Beispiel 1

Eine Probe 1 (X) aus Ni(99,99) der Abmessungen 5 x 5 x 35 mm wird in eine auf ≤ ± 0,1 K thermostatierte Ummantelung 4 eingeführt und auf eine auf ≤ ± 0,1 K thermostatierte Wärmequelle aufgesetzt. Diese Wärmequelle besteht aus einem Zwischenstück 3 und einem thermostatierten Auflageteil 2, die beide aus Kupfer bestehen. Das Auflageteil 2 wird von einem Thermostaten auf einer Temperatur von 40 °C gehalten. Die Berührungsflächen von Auflageteil 2 und Zwischenstück haben jeweils die Form einer Kugelkalotte und passen formschlüssig ineinander. Zwischen der Stirnfläche der Probe 1 (X) und dem Zwischenstück 3 befindet sich Wärmeleitkitt. Auf die andere Stirnseite der Probe 1 (X) drückt das Andrückteil 6, bestehend aus einer PVC-Spitze und einem Gewicht von 19,62 N (2 kp). Die Ummantelung 4 besteht aus Kupfer und wird von einem Thermostaten auf einer Temperatur von 30 °C gehalten. Nach ca. 5 min hat sich der stationäre Zustand eingestellt, und es werden mittels eines NiCr/Ni-Thermoelementes die Thermospannungen gemessen, die einfach in Temperaturen umgerechnet werden können. In der Bohrung 7, die sich nahe der Stirnfläche der Probe 1 (X) befindet, die mit dem Zwischenstück 3 über den Wärmeleitkitt in Verbindung steht, wird die Thermospannung $T_W$ gemessen. In der Bohrung 5 der Ummantelung 4 wird die Thermospannung $T_U$ gemessen, und in der Bohrung 7, die sich nahe der Stirnfläche der Probe 1 (X) befindet, auf die das Andrückteil 6 drückt, wird die Thermospannung $T_L$ gemessen. Dabei ergaben sich folgende Werte:  gemessen. Dabei ergaben sich folgende Werte:

$$T_{XW} = 1{,}531 \text{ mV}$$
$$T_{XU} = 1{,}189 \text{ mV}$$
$$T_{XL} = 1{,}489 \text{ mV}.$$

Anschließend wird die Probe 1 (X) aus der Vorrichtung herausgenommen und eine Probe 1 (A) aus Cu-(99,99) mit den gleichen Abmessungen wie die Probe 1 (X) und mit einer Wärmeleitfähigkeit von

$$\lambda_A = 3,94 \; \frac{W}{m \cdot K}$$

(siehe H. Küstner, 5-stellige Logarithmen, VEB Fachbuchverlag Leipzig, 1975, 22. Auflage) in die Vorrichtung eingesetzt. Nach Einstellung des stationären Zustandes in der Probe 1 (A) werden die Thermospannungen $T_W$, $T_U$ und $T_L$ gemessen. Dabei ergaben sich folgende Werte: gemessen. Dabei ergaben sich folgende Werte:

$$T_{AW} = 1,541 \text{ mV}$$
$$T_{AU} = 1,182 \text{ mV}$$
$$T_{AL} - 1,350 \text{ mV}.$$

Mit diesen Werten kann die Wärmeleitfähigkeit $\lambda_X$ der Probe 1 (X) über die Beziehung

$$\lambda_X = \left( \frac{arcosh\left(\frac{T_{AW}-T_{AU}}{T_{AL}-T_{AU}}\right)}{arcosh\left(\frac{T_{XW}-T_{XU}}{T_{XL}-T_{XU}}\right)} \right)^2 \cdot \lambda_A$$

ermittelt werden. Danach ergibt sich für die Probe 1 (x) eine Wärmeleitfähigkeit von $\lambda_X + 0,22$ .

$$\lambda_A = 86,7 \; \frac{W}{m \cdot K} \; .$$

Zur Ermittlung des mitleren Fehlers wurde der Versuch 16mal wiederholt. Dabei ergab sich ein mittlerer Fehler des arithmetischen Mittelwertes $\Delta(\overline{\lambda_X/\alpha_X}) = 0,5$ %.

Beispiel 2

Eine Probe 1 (X) aus X10NiCr-MoTiB und den Abmessungen 5x5x35 mm wird entsprechend den Proben des Beispiels 1 in die Vorrichtung eingebracht, erwärmt, und nach ca. 15 min, nachdem sich der stationäre Zustand eingestellt hat, werden die Thermospannungen gemessen. Dabei ergibt sich

$$T_{XW} = 1,550 \text{ mV}$$
$$T_{XU} = 1,208 \text{ mV}$$
$$T_{XL} = 1,373 \text{ mV}.$$

Anschließend wird eine Probe 1 (A) aus Ni(99,99) mit den gleichen Abmessungen wie die Probe 1 (X) und mit einer Wärmeleitfähigkeit von

$$\lambda_A = 86,7 \; \frac{W}{m \cdot K}$$

(Quelle siehe Beispiel 1) in die Vorrichtung eingebracht, erwärmt, und nach ca. 5 min, nachdem sich der stationäre Zustand eingestellt hat, werden die Thermospannungen gemessen. Dabei ergibt sich:

$$T_{AW} = 1,531 \text{ mV}$$
$$T_{AU} = 1,189 \text{ mV}$$

$$T_{AL} = 1,489 \text{ mV.}$$

Über die Beziehung entsprechen Beispiel 1 ergibt sich eine Wärmeleitfähigkeit der Probe 1 (X) von $\lambda_X = 0,15$ .

$$\lambda_A = 13 \ \frac{W}{m.K} \ .$$

Zur Ermittlung des mittleren Fehlers wurde der Versuch 14mal wiederholt. Dabei ergab sich ein mittlerer Fehler des arithmetischen Mittelwertes $\Delta(\overline{\lambda_X/\alpha_X}) = 0,6$ %.

**Aufstellung der verwendeten Bezugszeichen**

| | |
|---|---|
| 1 | Probe |
| 2 | thermostatiertes Auflageteil |
| 3 | Zwischenstück |
| 4 | thermostatierte Ummantelung |
| 5 | Bohrung |
| 6 | Andrückteil |
| 7 | Bohrung |
| 8 | Nut |
| 9 | Scheibe |

**Patentansprüche**

1. Verfahren zur Ermittlung der Wärmeleitfähigkeit von Werkstoffen, bei dem eine stabförmige Probe (X) mit einem Verhältnis von Länge zu Durchmesser L/D $\geq$ 7 des Werkstoffs mit der zu ermittelnden Wärmeleitfähigkeit $\lambda_X$ und eine stabförmige Probe (A) gleicher Abmessungen mit bekannter Wärmeleitfähigkeit $\lambda_A$ zeitlich nacheinander in eine auf $\leq \pm$ 0,1 K thermostatierte Ummantelung eingesetzt und mit einer ihrer Stirnflächen mit einer $\leq \pm$ 0,1 K thermostatierten Wärmequelle kontaktiert werden, die auf einer höheren Temperatur gehalten wird als die Ummantelung, nach Eintritt des wärmetechnisch stationären Zustandes an oder dicht unter den beiden Stirnflächen die Temperaturen in der Probe (A, X) gemessen werden, wobei an oder dicht unter der Stirnfläche, die mit der thermostatierten Wärmequelle in Verbindung steht, eine Temperatur $T_{XW}$ bzw. $T_{AW}$ gemessen wird, die größer ist als die in der Ummantelung gemessene Temperatur $T_{XU}$ bzw. $T_{AU}$, und an oder dicht unter der anderen Stirnfläche der Probe eine Temperatur $T_{XL}$ bzw. $T_{AL}$ gemessen wird, und daraus die Wärmeleitfähigkeit $\lambda_X$ der Probe (X) nach der Beziehung

$$\lambda_x = \left[ \frac{\text{arcosh}\left(\dfrac{T_{AW} - T_{AU}}{T_{AL} - T_{AU}}\right)}{\text{arcosh}\left(\dfrac{T_{XW} - T_{XU}}{T_{XL} - T_{XU}}\right)} \right]^2 \cdot \lambda_A$$

ermittelt wird.

2. Verfahren nach Anspruch 1, bei dem die Temperatur der Probekörper (1) jeweils in einer Bohrung dicht unter einer Stirnfläche des Probekörpers gemessen wird.

3. Verfahren nach Anspruch 1, bei dem die Temperatur der Probekörper (1) jeweils in einer Nut an einer Stirnfläche der Probekörper (1) gemessen wird.

**4.** Vorrichtung zur Durchführung des Verfahrens nach einem der Ansprüche 1-3, mit einer thermostatierten Wärmequelle und zwei Temperaturmeßstellen zur Messung der Temperatur der Probe (1), dadurch gekennzeichnet, daß
- die Vorrichtung für die Aufnahme nur einer stabförmigen Probe (1) mit einem Verhältnis von Länge zu Durchmesser L/D ≥ 7 ausgebildet ist,
- die thermostatierte Wärmequelle sich zusammensetzt aus einem thermostatierten Aufnahmeteil (2) und einem Zwischenstück (3) zur Wärmeübertragung an eine Stirnfläche der Probe (1), wobei das Zwischenstück auf der einen Seite vollständig mit der gesamten Stirnfläche der Probe (1) und auf der anderen Seite vollständig mit dem thermostatierten Aufnahmeteil (2) in Berührung ist,
- die Temperaturmeßstelle zur Messung der Temperaturen der Probe an oder dicht unter den Stirnflächen der Probe (1) befinden, und die Vorrichtung weiter
- eine thermostatierte Ummantelung (4) zur Konstanthaltung der Umgebungsbedingungen der Probe (1), wobei die Ummantelung (4) nicht die Oberfläche der Probe (1) berührt,
- eine Temperaturmeßstelle mit einer Bohrung (5) in der thermostatierten Ummantelung (4), und
- ein Andrückteil (6) mit einer möglichst punktförmigen Auflage auf der anderen Stirnseite der Probe (1) zur Druckübertragung auf alle Berührungsflächen der Vorrichtung und zwischen der Vorrichtung und der Probe (1) umfaßt.

**5.** Vorrichtung nach Anspruch 4, dadurch gekennzeichnet, daß sich zwischen der einen Stirnfläche der Probe (1) und dem Andrückteil (6) eine Scheibe (9) aus einem gut wärmeleitenden Material befindet.

**6.** Vorrichtung nach Anspruch 4 oder 5, dadurch gekennzeichnet, daß das thermostatierte Auflageteil (2) und die Seite des Zwischenstücks (3), die mit dem thermostatierten Auflageteil (2) in Berührung steht, jeweils die Form einer Kugelkalotte haben und formschlüssig ineinanderpassen.

**7.** Vorrichtung nach einem der Ansprüche 4-6, dadurch gekennzeichnet, daß sich auf den Berührungsflächen des Zwischenstücks (3) ein wärmeleitender Klebstoff befindet.

**8.** Vorrichtung nach einem der Ansprüche 4-7, dadurch gekennzeichnet, daß das Zwischenstück (3) zwischen thermostatiertem Auflageteil (2) und Probe (1) und die Scheibe (9) zwischen Probe (1) und Andrückteil (6) aus Kupfer bestehen.

**Claims**

**1.** Method of determining the thermal conductivity of working materials, wherein
a bar-shaped sample (X) with a length to diameter ratio L/D ≥ 7 of the working material with the thermal conductivity $\lambda_X$ to be determined and a bar-shaped sample (A) with the same dimensions with a known thermal conductivity $\lambda_A$ are placed one after the other in time sequence into a casing thermostatically controlled at ≤ ± 0.1 K and are brought into contact at one of their faces with a heat source, which is thermostatically controlled at ≤ ± 0.1 K and is maintained at a higher temperature than the casing; after the thermally steady state has occurred on or closely below the two faces, the temperatures in the sample (A, X) are measured, in which case on or closely below the face connecting to the thermostatically controlled heat source a temperature $T_{XW}$ and $T_{AW}$ respectively is measured which is higher than the temperature $T_{XU}$ and $T_{AU}$ respectively measured in the casing, and on or closely below the other face of the sample a temperature $T_{XL}$ and $T_{AL}$ respectively is measured;
and the thermal conductivity $\lambda_X$ of the sample (X) is determined therefrom according to the equation

$$\lambda_X = \left[ \frac{\text{arcosh}\left(\dfrac{T_{AW} - T_{AU}}{T_{AL} - T_{AU}}\right)}{\text{arcosh}\left(\dfrac{T_{XW} - T_{XU}}{T_{XL} - T_{XU}}\right)} \right]^2 \cdot \lambda_A$$

2. Method according to Claim 1, wherein the temperature of the sample (1) is measured respectively in a drilled hole closely below a face of the sample.

3. Method according to Claim 1, wherein the temperature of the sample (1) is measured respectively in a groove on a face of the sample (1).

4. Apparatus for implementing the method according to one of Claims 1 to 3, with a thermostatically controlled heat source and two temperature measurement points for measuring the temperature of the sample (1), characterised in that
   - the device for receiving only one bar-shaped sample (1) is constructed with a length to diameter ratio $L/D \geq 7$;
   - the thermostatically controlled heat source consists of a thermostatically controlled receiving portion (2) and an intermediate portion (3) for heat transfer onto a face of the sample (1), one side of said intermediate portion being in full contact with the entire face of the sample (1) and the other side thereof being in full contact with the thermostatically controlled receiving portion (2);
   - the temperature measurement point for measuring the temperatures of the sample is located on or closely below the faces of the sample (1);
   and the apparatus further comprises
   - a thermostatically controlled casing (4) for keeping constant the ambient conditions of the sample (1), in which case said casing (4) does not come into contact with the surface of the sample (1);
   - a temperature measurement point with a drilled hole (5) in the thermostatically controlled casing (4), and
   - a press-on portion (6) abutting the other face of the sample (1) as far as possible in the form of a point to transfer pressure onto all contact surfaces of the apparatus and between the apparatus and the sample (1).

5. Apparatus according to Claim 4, characterised in that a disc (9) made from a material with good thermal conduction properties is located between the one face of the sample (1) and the press-on portion (6).

6. Apparatus according to Claim 4 or 5, characterised in that the thermostatically controlled receiving portion (2) and the side of the intermediate portion (3), which is in contact with the thermostatically controlled receiving portion (2), are each constructed in the form of a calotte shell and fit into one another in a form-locking manner.

7. Apparatus according to one of Claims 4 - 6, characterised in that a thermally conductive adhesive is located on the contact surfaces of the intermediate portion (3).

8. Apparatus according to one of Claims 4 - 7, characterised in that the intermediate portion (3) between the thermostatically controlled receiving part (2) and the sample (1) and the disc (9) between the sample (1) and the press-on portion (6) are made of copper.

**Revendications**

1. Procédé pour déterminer la conductivité thermique de matériaux, dans lequel :
   une éprouvette (X) en forme de barre, ayant un rapport de la longueur au diamètre $L/D \geq 7$ du matériau et une conductivité thermique $\lambda_X$ à déterminer, et une éprouvette (A) en forme de barre ayant des dimensions identiques et une conductivité thermique $\lambda_A$ connue sont placées successivement dans une enveloppe dont la température est réglée à $\leq \pm 0{,}1$ K au moyen d'un thermostat et amenées par leur face frontale au contact d'une source thermique réglée à $\leq \pm 0{,}1$ K au moyen d'un thermostat, qui est maintenue à une température plus élevée, comme enveloppe,
   après l'apparition de l'état thermiquement stationnaire sur ou directement au-dessous des deux faces frontales, on mesure les températures dans l'éprouvette (A, X), et sur ou directement au-dessous de la face frontale qui est reliée à la source thermique réglée par thermostat, on mesure une température $T_{XW}$ ou $T_{AW}$ qui est supérieure à la température $T_{XU}$ ou $T_{AU}$ mesurée dans l'enveloppe, et sur ou directement au-dessous de l'autre face frontale de l'éprouvette, on mesure une température $T_{XL}$ ou $T_{AL}$, et

à partir de ces valeurs, on détermine la conductivité thermique $\lambda_X$ de l'éprouvette (X) selon l'équation :

$$
\lambda_x = \left[ \frac{\operatorname{arcosh}\left(\frac{T_{AW} - T_{AU}}{T_{AL} - T_{AU}}\right)}{\operatorname{arcosh}\left(\frac{T_{KW} - T_{XU}}{T_{XL} - T_{XU}}\right)} \right]^2 \cdot \lambda_A
$$

2. Procédé selon la revendication 1, dans lequel on mesure la température de l'éprouvette (1) à chaque fois dans un trou situé directement au-dessous d'une face frontale de l'éprouvette.

3. Procédé selon la revendication 1, dans lequel on mesure la température de l'éprouvette (1) à chaque fois dans une rainure située sur une face frontale de l'éprouvette (1).

4. Dispositif pour la mise en oeuvre du procédé selon l'une des revendications 1 à 3, comprenant une source thermique réglée par thermostat et deux emplacements de mesure de la température pour mesurer la température de l'éprouvette (1), caractérisé en ce que
   - le dispositif est prévu pour recevoir seulement une éprouvette (1) en forme de barre, avec un rapport de la longueur au diamètre L/D $\geq$ 7,
   - la source thermique réglée par thermostat est formée d'un élément de réception (2) dont la température est réglée au moyen d'un thermostat, et d'un élément intermédiaire (3) pour le transfert thermique sur une face frontale de l'éprouvette (1), l'élément intermédiaire étant complètement au contact de l'ensemble de la face frontale de l'éprouvette (1), d'une part, et complètement au contact de l'élément de réception (2) dont la température est réglée au moyen d'un thermostat, d'autre part,
   - l'emplacement de mesure de la température, pour la mesure des températures de l'éprouvette, est situé sur ou directetement au-dessous des faces frontales de l'éprouvette (1), et le dispositif comprend, en outre :
   - une enveloppe (4) dont la température est réglée au moyen d'un thermostat, pour le maintien constant des conditions ambiantes de l'éprouvette (1), ladite enveloppe (4) n'étant pas au contact de la surface de l'éprouvette (1),
   - un emplacement de mesure de la température, avec un trou (5) dans l'enveloppe (4) dont la température est réglée au moyen d'un thermostat, et
   - un élément de pression (6) avec un support, autant que possible par points, sur l'autre face frontale de l'éprouvette (1), pour le transfert de pression sur toutes les faces de contact du dispositif et entre le dispositif et l'éprouvette (1).

5. Dispositif selon la revendication 4, caractérisé en ce qu'un disque (9) de matériau ayant une bonne conductivité thermique est situé entre une face frontale de l'éprouvette (1) et l'élément de pression (6).

6. Dispositif selon la revendication 4 ou 5, caractérisé en ce que l'élément de support (2) dont la température est réglée au moyen d'un thermostat et le côté de l'élément intermédiaire (3) qui est au contact de l'élément de support (2) à température réglée par thermostat ont chacun la forme d'une calotte sphérique et s'adaptent l'un dans l'autre par complémentarité de formes.

7. Dispositif selon l'une des revendications 4 à 6, caractérisé en ce qu'une colle thermoconductrice est située sur les faces de contact de l'élément intermédiaire (3).

8. Dispositif selon l'une des revendications 4 à 7, caractérisé en ce que l'élément intermédiaire (3) situé entre l'élément de support (2), dont la température est réglée au moyen d'un thermostat, et l'éprouvette (1), ainsi que le disque (9) situé entre l'éprouvette (1) et l'élément de pression (6) sont constitués de cuivre.

Fig.2

Fig.1